**Europäisches Patentamt**

**European Patent Office**

**Office européen des brevets**

(11) Veröffentlichungsnummer: **0 151 460**
**A2**

## (12) EUROPÄISCHE PATENTANMELDUNG

(21) Anmeldenummer: **85100942.3**

(22) Anmeldetag: **30.01.85**

(51) Int. Cl.⁴: **F 24 D 11/02**

(30) Priorität: **09.02.84 CH 611/84**

(43) Veröffentlichungstag der Anmeldung:
**14.08.85 Patentblatt 85/33**

(84) Benannte Vertragsstaaten:
**DE FR NL**

(71) Anmelder: **GEBRÜDER SULZER AKTIENGESELLSCHAFT**
**Zürcherstrasse 9**
**CH-8401 Winterthur(CH)**

(72) Erfinder: **Huber, Rudolf**
**Möttelistrasse 61**
**CH-8400 Winterthur(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) Raumheizungsanlage.

(57) Aus dem Deckenbereich des unteren Wasserraumes (14) des horizontal geteilten wassergefüllten Wärmespeichers (3) kann eine Entnahmeleitung (36) wahlweise zur konventionellen Rücklauf-Beimischleitung (9, 37) auf das Mischventil (6) im Vorlauf (4) des Heizkreislaufs geschaltet werden. Diese wahlweise Aufschaltung erfolgt für den bivalenten Betrieb, in dem der obere Wasserraum (13) des Speichers (3) als Speichervolumen für kesselbeheiztes Wasser dient, während der untere Wasserraum (14) den Speicher für wärmepumpenerwärmtes Wasser bildet.

Mit der Entnahmeleitung (36) wird daher ausschliesslich wärmepumpenerwärmtes Wasser – und nicht der Rücklauf des Heizkreislaufs direkt – dem Vorlauf in der Leitung (4) beigemischt.

Mit dieser Art der "Rücklaufbeimischung" wird – abgesehen von der aus Sicherheitsgründen vorhandenen Ueberschussleitung – die ganze Wärmepumpenleistung zur Erwärmung des Vorlaufwassers des Heizkreislaufs genutzt, ehe die Heizleistung des Kessels (19) zur Deckung des restlichen Heizbedarfs herangezogen werden muss. Dadurch ergeben sich bei geringen Schalthäufigkeiten maximale Laufzeiten für die Wärmepumpe (31) und minimale Laufzeiten für die Kesselfeuerung (24).

./...

P. 5862/Wg/IS

Gebrüder Sulzer, Aktiengesellschaft, Winterthur/Schweiz

## Raumheizungsanlage

Die Erfindung betrifft eine Raumheizungsanlage mit einem oel- oder gasbefeuerten Kessel und einer Wärmepumpe für die Zufuhr der Heizwärme im monovalenten oder bivalenten Heizbetrieb und mit einem wassergefüllten Wärmespeicher, der horizontal in zwei im wesentlichen getrennte, jedoch miteinander kommunizierende Wasserräume unterschiedlicher mittlerer Temperatur geteilt ist, wobei der obere Wasserraum des Speichers in einen über den Kessel führenden Aufheizkreislauf für das gespeicherte Wasser und mindestens der untere Wasserraum des Speichers in den Kondensatorkreislauf der Wärmepumpe einbezogen sind, wobei ferner in den Bodenbereich des unteren Wasserraumes die Rücklaufleitung der Heizungsanlage mündet, und wobei schliesslich zwischen der Rücklaufleitung und einem Mischventil in der Vorlaufleitung der Heizungsanlage eine Rücklaufbeimischleitung vorgesehen ist.

Bekanntlich kann eine Raumheizungsanlage der vorstehend genannten Art abhängig von der Aussentemperatur auf drei verschiedene Arten betrieben werden. Bei tiefen Aussentemperaturen, bei denen die Wärmepumpe nicht in Betrieb steht, wird die ganze Heizleistung im sogenannten "monovalenten Kesselbetrieb" von der Kesselfeuerung erbracht; ab einem gewissen Mindestwert für die Aussentemperatur arbeitet die Anlage im bivalenten Betrieb, in dem die Wärmepumpe und der Kessel gemeinsam den Wärmebedarf decken.

Reicht in der sogenannten Uebergangszeit - beispielsweise bei Aussentemperaturen zwischen -5° und + 20° - die von der Wärmepumpe erbrachte Wärmeleistung aus, so sorgt im monovalenten Wärmepumpenbetrieb die Wärmepumpe allein für die Erzeugung der notwendigen Heizwärme.

Die Wärmepumpe nutzt im allgemeinen Wärmequellen, deren Energie - Niedrigtermperaturwärme oder Abfallenergie - nicht sehr hochwertig ist; es besteht daher das Ziel, die Wärmepumpe im bivalenten Betrieb möglichst weitgehend in ihrem Leistungsvermögen zu nutzen, ehe der Restbedarf an Wärme durch den Kessel aufgebracht wird, der im allgemeinen mit hochwertiger Energie gespeist wird.

Eine Raumheizungsanlage der eingangs genannten Art ist beispielsweise aus der EP-B-0 001 419 bekannt. Bei dieser Anlage, in der die Wärmepumpe ausser für Heizzwecke auch noch für eine Brauchwasseraufbereitung genutzt wird, ist es nicht möglich, die - abgesehen von der aus Sicherheitsgründen vorhandenen Ueberschussleistung der Wärmepumpe - gesamte Wärmepumpenleistung im bivalenten Betrieb für den Heizkreislauf nutzbar zu machen, da bei dieser Anlage nur der nicht beigemischte Teil des gesamten, die Verbraucher verlassenden Rücklaufes von der Wärmepumpe aufgewärmt werden kann, während der andere Teil der Rücklaufmenge als Rücklaufbeimischung wieder direkt dem Vorlauf beigemischt wird.

Aufgabe der Erfindung ist es daher, eine Raumheizungsanlage der eingangs genannten Art zu schaffen, bei der zunächst soweit wie möglich die Wärmepumpenleistung - d.h. die von ihr in einer Zeiteinheit maximal zu erzeugende Wärme- bzw. Energiemenge - im bivalenten Heiz-

- 3 -                    0151460

betrieb genutzt wird, ehe die Kesselleistung in Anspruch genommen wird; das Ziel dieser Massnahme ist, für die Wärmepumpe eine möglichst grosse und für die Kesselfeuerung eine möglichst kleine Gesamt-Einschaltzeit zu erzielen, wobei bei beiden die individuelle Einschaltdauer nach einer Inbetriebsetzung jeweils möglichst lang sein soll.

Nach der Erfindung wird diese Aufgabe dadurch gelöst, dass aus dem Deckenbereich des unteren Wasserraumes des Speichers eine Entnahmeleitung für durch die Wärmepumpe vorgewärmtes Wasser in die Rücklaufbeimischleitung des Heizkreislaufs führt, und dass Durchflussabsperrorgane eine wahlweise Aufschaltung der Rücklaufbeimisch- und der Entnahmeleitung auf das Mischventil erlauben.

Bei der neuen Anlage gelangt die von den Verbrauchern des Heizkreislaufs zurückströmende Rücklaufmenge über den Bodenbereich des unteren Wasserraumes in die Wärmepumpe und wird dort aufgewärmt, ehe ein Teil als konventionelle Rücklaufbeimischung dem Vorlauf beigemischt wird. Die übliche Rücklaufbeimischung erfolgt also nicht mit dem abgekühlten Heizungsrücklauf direkt, sondern erst nachdem dieser durch die Wärmepumpe soweit wie möglich aufgewärmt worden ist. Entsprechend verringert sich die zusätzlich dem oberen Wasserraum als Kesselspeicher zu entnehmende Wärme- bzw. Wassermenge. Die integrale Einschaltdauer für die Kesselfeuerung kann so auf ein Minimum beschränkt werden.

Unnötiges Einschalten der Kesselfeuerung kann dabei noch zusätzlich verhindert werden, wenn in der Heizkreislauf-Vorlaufleitung beiderseits des Mischventils je ein Temperaturfühler vorgesehen ist, von denen derjenige nach dem Mischventil die Rücklaufbeimischung steuert, während die Messwertdifferenz zwischen beiden bei Unterschreiten eines Minimalwertes eine Blockierung in der Feuerungsregelung freigibt.

In solchen Anlagen hat ein Wärmespeicher die Aufgabe, als Puffer zu wirken, um die Ein-/Ausschalt-Häufigkeit für die Wärmepumpe und/oder für die Kesselfeuerung möglichst niedrig zu halten.

Da die Schaltvorgänge für ein Aufladen des Speichers im allgemeinen von Temperaturfühlern gesteuert werden, ist es weiterhin nützlich, wenn das im Speicher gespeicherte Wasser soweit wie möglich in Schichten mit von unten nach oben steigender Temperatur "gelagert" ist, ohne dass in dieser Schichtung - beispielsweise durch turbulente Strömungsvorgänge - grössere Störungen vorhanden sind. Es ist daher vorteilhaft, einen Wärmespeicher vorzusehen, der - neben einer Speicherung des wärmepumpenerwärmten Wassers - auch eine Speicherung für kesselbeheiztes Wasser ohne unwirtschaftlich grosse Wärmeverluste ermöglicht und bei dem zum zweiten die erwähnte Ausbildung und Aufrechterhaltung der Schichten gewährleistet ist. Ein solcher Wärmespeicher kann beispielsweise konstruktiv so gestaltet werden, dass eine Einspeiseleitung für im Kondensator der Wärmepumpe aufgewärmtes Wasser im Bereich der Teilung des Speichers in eine Innenkammer mündet, von der aus je ein Wasseraustrittsrohr in den Deckenbereich des oberen und des unteren Wasserraumes führen.

Da die Auslegung der Wärmepumpe mit einer gewissen Leistungsreserve erfolgt, wird auch bei der neuen Anlage die Wärmepumpe nicht ununterbrochen laufen; um jedoch nach einem Unterbruch ein rechtzeitiges Wiedereinschalten der Wärmepumpe sicherzustellen, ist es zweckmässig, wenn im Deckenbereich des unteren und des oberen Wasserraumes des Speichers ein Temperaturfühler vorgesehen ist, die, von einem aussentemperaturgesteuerten Auswahlorgan ausgewählt, wahlweise eine Inbetriebsetzung der Wärmepumpe bewirken. Mit dieser Anordnung der Temperaturfühler wird gleichzeitig ermöglicht, dass im monovalenten Wärmepumpenbetrieb beide Wasserräume des Speichers zur Speicherung von wärmepumpenbeheiztem Wasser benutzt werden können.

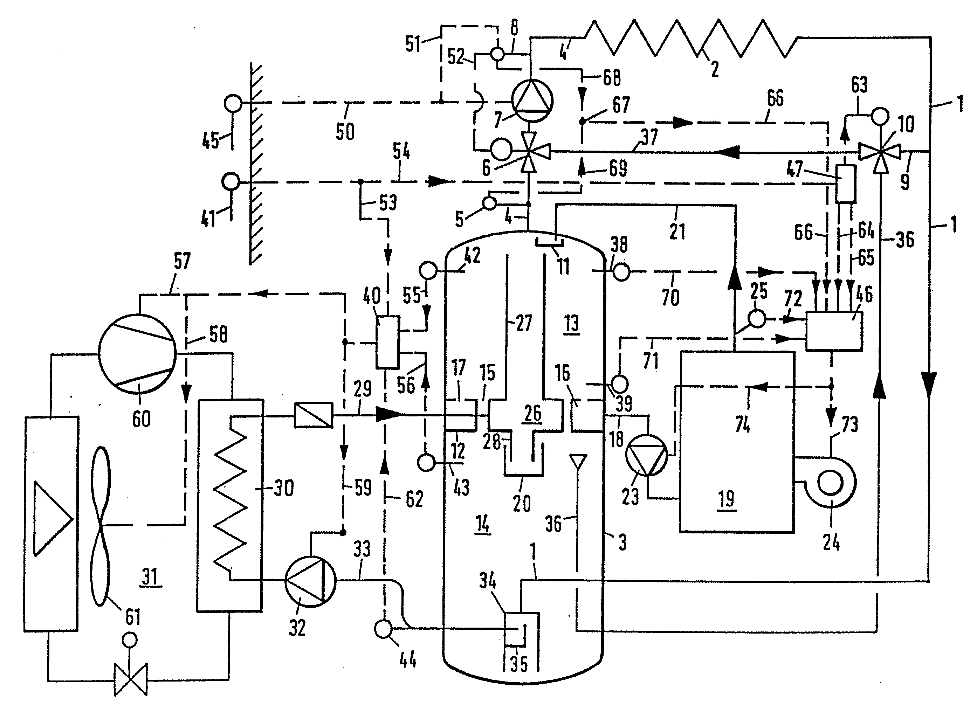

Im folgenden wird die Erfindung anhand eines Ausführungsbeispiels im Zusammenhang mit der Zeichnung näher erläutert.

Die einzige Figur zeigt schematisch ein Schaltbild der neuen Raumheizungsanlage, in das die wichtigsten Signalleitungen für ihre Steuerung eingetragen sind.

Zu dem eigentlichen Heizkreislauf gehörend, führt eine Rücklaufleitung 1 vom Ende der Heizwärme-Verbraucher 2 in den Bodenbereich eines vertikal stehenden, wassergefüllten Wärmespeichers 3, dessen genauerer Aufbau später beschrieben wird.

Eine Vorlaufleitung 4 des Heizkreislaufs entspringt in der Decke des Speichers 3 und führt über einen ersten Temperaturfühler 5, ein Mischventil 6, eine Umwälzpumpe 7 und einen zweiten Temperaturfühler 8 zu den Wärmeverbrauchern 2, womit der Heizkreislauf geschlossen ist. Aus der Rücklaufleitung 1 zweigt - wie bei konventionellen Heizkreisläufen - eine Rücklauf-Beimischleitung 9 ab, die zu einem später in seiner Funktion näher erläuterten Umschaltorgan 10 führt; dieses ist seinerseits über eine Zuführleitung 37 mit dem Mischventil 6 verbunden.

Das Gefäss des Wärmespeichers 3 ist durch einen etwa in der Mitte seiner vertikalen Abmessung liegenden Zwischenboden 12 in einen oberen Wasserraum 13 und einen unteren Wasserraum 14 getrennt. Durch einen Ringspalt 15 im Boden 12 kommunizieren beide Wasserräume 13 und 14 miteinander, ohne dass sich ihre Inhalte mischen. Im oberen Wasserraum 13 herrscht während allen Betriebsarten eine höhere mittlere Wassertemperatur als im unteren Wasserraum 14. Auf den Zwischenboden 12 wird im Bodenbereich des oberen Wasserraumes 13 eine ringförmige Kammer 16 gebildet, die nach oben weitgehend geschlossen ist; sie weist jedoch über ihren ganzen Umfang Oeffnungen 17 auf, durch die aus dem oberen Wasserraum 13 Wasser in die Kammer 16 nachströmen kann, wenn solches, gefördert von einer Pumpe 23, über eine Kessel-Rücklaufleitung 18 dem Kessel 19 zufliesst.

Vom im allgemeinen oel- oder gasbefeuerten - die zweistufig ausgebildete Feuerung ist durch einen Oelbrenner 24 angedeutet - Kessel 19 führt eine Kesselvorlaufleitung 21, in der ein Sicherheitsthermostat 25 vorgesehen ist, zurück in den Speicher 3; sie mündet in den Deckenbereich des oberen Wasserraumes 13, wobei ein Ueberlauf 11 vor der Einmündung der Leitung 21 eine horizontale Verteilung und eine vertikale Schichtung des Wassers ermöglicht. Der Kessel 19 bildet mit den Leitungen 18 und 21 und der Pumpe 23 sowie dem oberen Wasserraum 13 des Speichers 3 den - im monovalenten Kessel- oder im bivalenten Betrieb benötigten - Aufheizkreislauf für das gespeicherte Wasser.

Innerhalb der Ringkammer 16 des Speichers 3 ist auf dem Zwischenboden 12 eine weitere Kammer 26 vorgesehen, von der nach oben ein Wasseraustrittsrohr 27 in den Deckenbereich des oberen Wasserraumes 13 führt, während ein gleichartiges, nach unten gerichtetes Wasserrohr 28 syphonartig in einen Behälter 20 eintaucht und in den Deckenbereich des unteren Wasserraumes 14 hineinragt. In die Innenkammer 26 mündet eine Einspeiseleitung 29, die vom Kondensator 30 einer Wärmepumpe 31 kommt und der Kammer 26 in diesem Kondensator 30 aufgewärmtes Wasser zuführt.

Das im Kondensator 30 aufzuwärmende, abgekühlte Wasser wird mittels einer Pumpe 32 dem Bodenbereich des unteren Wasserraumes 14 über eine zum Kondensator 30 führende Leitung 33 entzogen, die von einer Entnahmehaube 34 ausgeht und einen Temperaturfühler 44 enthält; in diese Haube 34, in der eine Schikane 35 vorgesehen sein kann, führt auch die bereits erwähnte Heizungs-Rücklaufleitung 1, durch die der Rücklauf aus den Verbrauchern 2 in den Speicher 3 geleitet wird.

Erfindungsgemäss geht vom Deckenbereich des unteren Wasserraumes 14 eine weitere Leitung aus, die Entnahmeleitung 35, die zu dem Dreiweg-Umschaltorgan 10 in der konventionellen Rücklauf-Beimischleitung 9 des Heizkreislaufs führt. Mit der Entnahmeleitung 36 ist es möglich, während des bivalenten Betriebs dem Heizungsvorlauf über das übliche Mischventil 6 in der Leitung 4 als Beimischung nicht den kalten Heizungsrücklauf direkt beizumischen, sondern diesen zuvor im unteren Wasserraum 14 des Speichers 3 durch die Wärmepumpe 31 auf die mit dieser erreichbare Temperatur vorzuwärmen. Abgesehen von der bereits erwähnten, als Sicherheit dienenden Ueberschussleitung wird so die gesamte "Heizleistung" der Wärmepumpe 31 genutzt, ehe "Kesselwärme" verbraucht wird.

Im oberen Wasserraum 13, der im bivalenten oder im monovalenten "Kessel"-Betrieb als Speichervolumen für das im Kessel 19 aufgeheizte "Heiss"-Wasser dient, sind nahe dem Boden und nahe seiner Decke Temperaturfühler 38 und 39 vorgesehen.

Im Deckenbereich des oberen und des unteren Wasserraumes 13 bzw. 14 sind für die Steuerung der Wärmepumpe 31 je ein Temperaturfühler 42 und 43 vorhanden, die an ein von einem Aussentemperaturfühler 41 beeinflusstes Umschaltorgan 40 angeschlossen sind und das Einschalten der Wärmepumpe 31 und der Pumpe 32 in ihrem - aus der Leitung 33, dem Kondensator 30 und der Einspeiseleitung 29 bestehenden - Kondensatorkreislauf steuern.

Ein weiterer Aussentemperaturfühler ist mit 45 bezeichnet, während ein Regelorgan für die Kesselfeuerung und ein diesem vorgeschaltetes Steuerorgan die Bezugsziffern 46 und 47 tragen.

Unabhängig von der gerade "gefahrenen" Betriebsart der Anlage gelangt - in einer konventionellen aussentemperaturgesteuerten Regelung des Heizkreislaufs - das Messwertsignal des Aussentemperaturfühlers 45 über Signalleitungen 50 und 51 als Einschaltsignal auf den Antrieb für die Pumpe 7 und als Führungssignal für den Sollwert auf den Temperaturfühler 8; durch diesen wird über eine Signalleitung 52 zum Mischventil 6 die Vorlauftemperatur des den Verbrauchern 2 zufliessenden Warmwassers in bekannter Weise geregelt.

Die Auswahl, in welcher Betriebsart die Anlage gerade läuft, erfolgt durch den Aussentemperaturfühler 41, dessen Messwerte zum einen über die Signalverbindung 53 und das Umschaltorgan 40 und zum anderen über die Verbindung 54 auf das Steuerorgan 47 gelangen.

Das Umschaltorgan 40 wird dabei bei einem mit sinkender Aussentemperatur erfolgenden Uebergang vom monovalenten Wärmepumpenbetrieb zum bivalenten Betrieb wirksam, indem es - statt des bei wärmerem Wetter über die Signalleitung 55 erfassten Messwertes des Temperaturfühlers 42 im Deckenbereich des oberen Wasserraumes 13 - die über die Leitung 56 erfassten Temperaturmesswerte des Fühlers 43 im Deckenbereich des unteren Wasserraumes verarbeitet. Beim Unterschreiten eines eingestellten Temperaturwertes an den Fühlern 42 und 43 veranlasst das Umschaltorgan 40 die Ausgabe von Stellsignalen, die über die Signalwege 57, 58 und 59 als Einschaltsignale dem Verdichter 60 und dem Ventilator 61 der Luft/Wasserwärmepumpe 31 und der Pumpe 32 im Wasserkreislauf des Kondensators 30 zufliessen. Ein Abschalten der Wärmepumpe 31 und der Umwälzpumpe 32 wird im Umschaltorgan 40 durch den Temperaturfühler 44 über eine Signalverbindung 62 ausgelöst.

Mit dieser Umschaltung kann im monovalenten Wärmepumpenbetrieb das ganze Volumen des Speichers 3 als Wärmespeicher für wärmepumpenerwärmtes Wasser dienen, was bei dieser Betriebsart die Einschalthäufigkeit der Wärmepumpe 31 erheblich reduziert. Beim Uebergang auf den bivalenten Betrieb wird durch das Umschaltorgan 40 das Speichervolumen für wärmepumpenerwärmtes Wasser automatisch auf den unteren Wasserraum 14 beschränkt.

Beim Uebergang von jedem der beiden monovalenten Betriebsweisen auf die bivalente Betriebsart veranlasst das
Steuerorgan 47 auf dem Weg 63 ein Umschalten des Dreiweg-
Umschaltorgans 10 in der Weise, dass statt/der Leitung 9,
die im monovalenten Betrieb mit der Zuführleitung 37
verbunden ist, eine Verbindung zwischen der Entnahmeleitung 36 und der Leitung 37 hergestellt wird. Selbstverständlich ist es möglich, dass Dreiweg-Ventil 10 durch
getrennte Auf/Zu-Absperrorgane in den Leitungen 9 und 36
zu ersetzen, wobei dann die Signale des Steuerorgans 47
auf diese Absperrorgane gelangen. Eine weitere Vereinfachung kann darin bestehen, dass nur in der Leitung 9 ein
Absperrorgan vorgesehen ist, das geöffnet und geschlossen
wird, und dassim monovalenten Betrieb die mit einem
relativ grossen Strömungswiderstand behaftete Leitung 36
in Parallelschaltung zur Leitung 9 einfach offen bleibt.

Weiterhin hebt das Steuerorgan 47 beim Uebergang vom
monovalenten Wärmepumpenbetrieb auf den bivalenten Betrieb
über eine Signalleitung 64 im Feuerungsregler 46 die
Blockierung für die erste Feuerungsstufe auf, während
zu Beginn des reinen Kesselbetriebs vom Organ 47 über
die Leitung 65 zusätzlich die zweite Stufe der Kesselfeuerung in Betriebsbereitschaft versetzt wird.

Auf den Regler 46 gelangt als weiteres generelles Freigabesignal für die Feuerung auf dem Signalweg 66 ein
Differenzsignal $\Delta t$, das im Punkt 67 aus den auf den
Signalleitungen 68 und 69 zugeführten Messwerten der
Temperaturfühler 5 und 8 in der Vorlaufleitung 4 gebildet
wird. Die Freigabe der Feuerung erfolgt dabei bei einem
fest eingestellten Differenzwert von beispielsweise
2 - 3° C; seine Lage kann jedoch je nach der vom Fühler 8 erfassten, geforderten Vorlauftemperatur z.B. im Bereich von Temperaturabsolutwerten zwischen 55° und 80° C schwanken.

Weitere Eingangssignale für die Feuerungsregelung können über die Signalverbindung 70 vom Temperaturfühler 38 dem Regler 46 zufliessen, der ein Einschaltsignal für die Feuerung gibt, wenn die Temperatur im oberen Wasserraum 13, der - wenn der Kessel 19 in Betrieb steht - als Speichervolumen für heisses kesselbeheiztes Wasser dient, einen bestimmten Grenzwert von beispielsweise 55° C unterschreitet. Ein Abschalten der Feuerung 24 wird ausgelöst, wenn der auf das Regelsystem 46 über die Signalleitung 71 gelangende Messwert des Temperaturfühlers 39 einen vorgegebenen Grenzwert überschreitet. Im Notfall kann diese Abschaltung auch von dem Sicherheitsthermostat 25 über die Leitung 72 ausgelöst werden.

Vom Regelorgan 46 gelangen die entsprechenden Ein/Ausschaltsignale zur Feuerung 24 und gleichzeitig zur Pumpe 23 im den Kessel enthaltenden Aufheizkreislauf auf den Signalwegen 73 und 74.

Für eine Aufheizung des gespeicherten "Heisswassers" im oberen Wasserraum 13 des Speichers 3 kommt, wie erwähnt, das Einschaltsignal für die Feuerung 24 vom Temperaturfühler 38; diesem übergeordnet ist jedoch das Differenzsignal vom Punkt 67, das die Feuerung erst freigibt, wenn tatsächlich heisses Wasser in der Vorlaufleitung 4 benötigt wird. Auf diese Weise wird der "Heisswasserspeicher" 13 erst aufgeladen, wenn Bedarf vorhanden ist, und nicht bereits, wenn er - ohne dass ein Bedarf ansteht - entladen ist. Durch diese Steuerung können Wärmeverluste am aufgeladenen "Heisswasserspeicher" 13 und die Einschalthäufigkeit
für die Kesselfeuerung 24 minimalisiert werden.

Patentansprüche

1. Raumheizungsanlage mit einem oel- oder gasbefeuerten Kessel und einer Wärmepumpe für die Zufuhr der Heizwärme im monovalenten oder bivalenten Heizbetrieb und mit einem wassergefüllten Wärmespeicher, der horizontal in zwei im wesentlichen getrennte, jedoch miteinander kommunizierende Wasserräume unterschiedlicher mittlerer Temperatur geteilt ist, wobei der obere Wasserraum des Speichers in einen, über den Kessel führenden Aufheizkreislauf für das gespeicherte Wasser und mindestens der untere Wasserraum des Speichers in den Kondensatorkreislauf der Wärmepumpe einbezogen sind, wobei ferner in den Bodenbereich des unteren Wasserraums die Rücklaufleitung der Heizungsanlage mündet und wobei schliesslich zwischen der Rücklaufleitung und einem Mischventil in der Vorlaufleitung der Heizungsanlage eine Rücklaufbeimischleitung vorgesehen ist, dadurch gekennzeichnet, dass aus dem Deckenbereich des unteren Wasserraumes (14) des Speichers (3) eine Entnahmeleitung (36) für durch die Wärmepumpe (31) vorgewärmtes Wasser in die Rücklaufbeimischleitung (9, 37) des Heizkreislaufs führt, und dass Durchflussabsperrorgane (10) eine wahlweise Aufschaltung der Rücklaufbeimisch- (9) und der Entnahmeleitung (36) auf das Mischventil (6) erlauben.

2. Raumheizungsanlage nach Anspruch 1, dadurch gekennzeichnet, dass in der Heizkreislauf-Vorlaufleitung (4) beiderseits des Mischventils (6), je ein Temperaturfühler (5, 8) vorgesehen ist, von denen derjenige (8) nach dem Mischventil (6) die Rücklaufbeimischung steuert, während die Messwertdifferenz ( $\Delta$ t) zwischen beiden bei Unterschreiten eines Minimalwertes eine Blockierung in der Feuerungsregelung (46) freigibt.

3. Raumheizungsanlage nach Anspruch 1 oder 2, dadurch gekennzeichnet, dass eine Einspeiseleitung (29) für im Kondensator (30) der Wärmepumpe (31) aufgewärmtes Wasser im Bereich der Teilung des Speichers (3) in eine Innenkammer (26) mündet, von der aus je ein Wasseraustrittsrohr (27, 28) in den Deckenbereich des oberen und des unteren Wasserraumes (13, 14) führen.

4. Raumheizungsanlage nach Anspruch 3, dadurch gekennzeichnet, dass im Deckenbereich des unteren und des oberen Wasserraumes (14 bzw. 13) des Speichers (3) je ein Temperaturfühler (42, 43) vorgesehen ist, die,von einem aussentemperaturgesteuerten Auswahlorgan (40) ausgewählt, wahlweise ein Inbetriebsetzung der Wärmepumpe (31) bewirken.